Europäisches Patentamt

European Patent Office

Office européen des brevets

(19)

(11) Publication number: **0 096 935**
**A1**

## (12) EUROPEAN PATENT APPLICATION

(21) Application number: **83200831.2**

(22) Date of filing: **07.06.83**

(51) Int. Cl.³: **C 09 J 3/06**

(30) Priority: **08.06.82 NL 8202310**

(43) Date of publication of application: **28.12.83**
**Bulletin 83/52**

(84) Designated Contracting States: **BE FR GB IT NL**

(71) Applicant: **Coöperatieve Verkoop- en Productievereniging van Aardappelmeel en Derivaten 'AVEBE' B.A., Beneden Oosterdiep 27, NL-9641 JA Veendam (NL)**

(72) Inventor: **Kamminga, Jurrien, Jacob Catsstraat 15, NL-9636 BX Zuidbroek (NL)**
Inventor: **van der Werff, Hendrikus G. A., Kleine Kamp 8, NL-9461 GV Gieten (NL)**

(74) Representative: **Urbanus, Henricus Maria, Ir. et al, c/o Vereenigde Octrooibureaux Nieuwe Parklaan 107, NL-2587 BP 's-Gravenhage (NL)**

(54) **A process for preparing an adhesive.**

(57) A process for preparing an adhesive, which comprises repeatedly passing a starch and water mixture through a recycling circuit including means exerting mechanical forces on the starch and water mixture, thereby generating heat, as a result of which ungelatinized starch granules swell, and swollen starch granules are disintegrated.

EP 0 096 935 A1

-1-

A process for preparing an adhesive.

The invention relates to a process for preparing starch adhesives, and also to the adhesives thus produced.

Starch products are used on a large scale as adhesives in the manufacture of corrugated cardboard, wound tubes, paper bags, laminated papers,gummed papers,labelling adhesives, and wall paper adhesive,among other products.

Ungelatinized starch as such is unsuitable for use as an adhesive. When a suspension of starch granules in water is heated above the gelatinization temperature, the starch granules begin to swell and disintegrate, forming a viscous, colloidal solution. The properties of this starch solution (viscosity, stability, structure, character, etc.) are dependent on many factors such as: the nature of the starch, the starch concentration, the rate and duration of warming-up, the temperatures applied, the presence or absence of mechanical forces, possible additives, and the apparatus in which gelatinization is effected.

When the traditional gelatinization equipment is used, native starch as such is often unsuitable as a raw material for the preparation of adhesives. Native starch,however, can be modified chemically and/or physically to render it suitable for a given specific use as an adhesive.Chemical modification can be effected by partial depolymerization (degradation) of the starch molecules (by means of alkali, acids,dextrinisation, oxidation or enzymes), by esterification or etherification, by cross-linking and by combinations of such processes. Physical modification of starch can be effected by gelatinizing native starch or chemically modified starch in the presence of water (e.g. by indirect heating, steam injection, extrusion, or alkali) possibly followed by drying the resulting starch solution (e.g. on rollers). The above modified starches are used on a large scale for the manufacture of adhesives.

There is also, however, an increasing need of adhesives that can be made on the basis of relatively inexpensive, unmodified or slightly modified starches. The process according to the present invention renders this possible. This process comprises repeatedly passing a water-starch mixture through a recycling circuit, which includes means for exerting mechanical forces on the starch-water mixture, thereby generating heat, whereby ungelatinized starch granules swell and swollen starch granules are disintegrated. Such means is designated herein by the word disintegrator. Suitable for use as a disintegrator are, in principle, all devices capable of exerting mechanical forces on starch-water mixtures, whereby heat is generated. Examples of suitable disintegrators are dispersers, emulsifiers, homogenizers, colloid mills, radial pumps, bar mills, flow tubes with baffles, jet tubes with vibrating plates or baffles or concentrating rings, and apparatus for intensively stirring, mixing or grinding.

Preferably, according to the invention, no total disintegration of the swollen starch granules is effected. Total disintegration produces a starch solution with a long structure. Such a starch solution can be drawn into long threads before the threads break. An adhesive with a long structure, when processed on fast-running machines, gives rise to un- desirable effects, such as "spinning" and splashing. Preferably, the swollen starch granules are only partially disintegrated to microscopically perceivable swollen granule fragments. The resulting aqueous adhesives then have the desired relatively short structure.

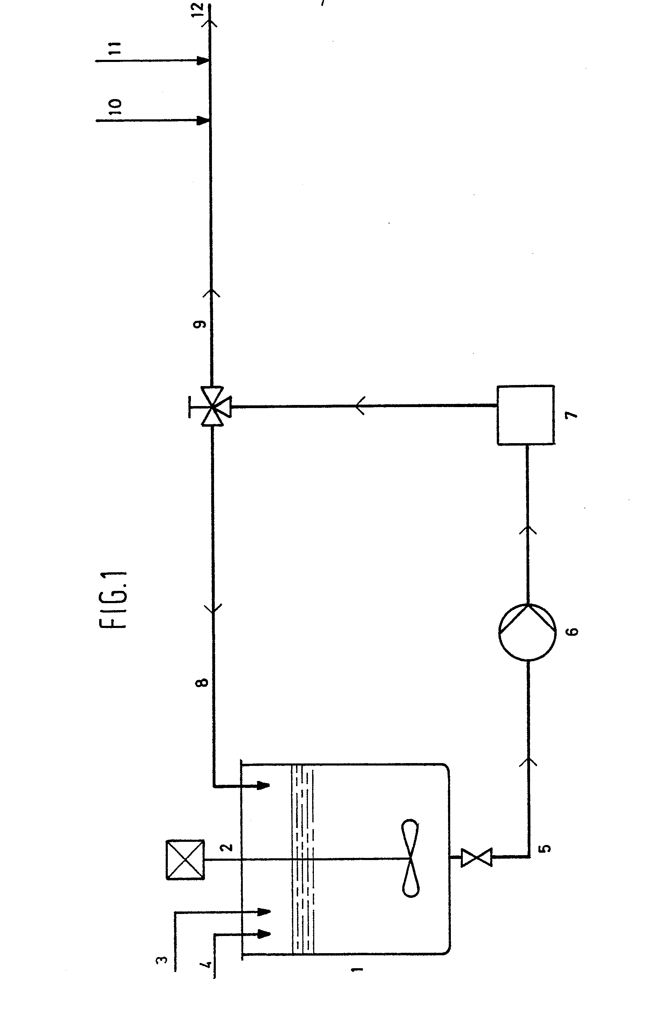

Fig. 1 shows an installation that can be used for carrying out the process according to the invention. In Fig. 1, 1 designates a tank equipped with a stirrer 2, and to which starch suspended in water can be supplied via conduit 3. Via conduit 4, other adhesive components may be supplied as desired. The starch concentration may vary within a broad range, but preferably ranges between 5 and 30 % by weight. The starting starch suspension has, for example, a temperature ranging between 20°C and the gelatinization temperature of the starch, preferably 40-60°C. This can be realized by adding the granular starch to warm water (e.g. of 60°C) or by heating the starch suspension. By using a pre-heated starch suspension as the starting product, the recycling time is reduced, and the capacity of the installation is increased. Subsequently, the starch suspension is circulated through conduit 5 (by means of pump 6) into a recycling circuit, which also includes disintegrator 7. Via conduit 8, the recycling circuit is connected to vessel 1. Owing to the heat generated in the disintegrator, the starch suspension is gradually brought to temperatures at which the starch granules begin to swell from hydration. The swelling granules are fragmented in the disintegrator to swollen granule fragments. Generally speaking, the frictional heat of the disintegrator will be sufficient to raise the temperature of the starch-water mixture at the desired rate. If desired, an external source of heat may be used. The temperature maintained to realize the desired degree of gelatinization and fragmentation of the starch granules is preferably below 90°C. The recycling period required for the starch to be sufficiently gelatinized depends, among other factors, on initial and final temperatures, the starch concentration, the nature of the starch,and the intensity of the mechanical forces active in the disintegrator. Preferably the circulation period is less than 1 hour. When the starch is gelatinized to the desired degree, the starch and water mixture is withdrawn from the recycling circuit via conduit 9. Subsequently, cold water can be supplied through conduit 10 and possibly further additives through conduit 11. The cold water can be added to cool and dilute the starch adhesive. Through conduit 12 the ready product can be passed to a storage container for use as adhesive.

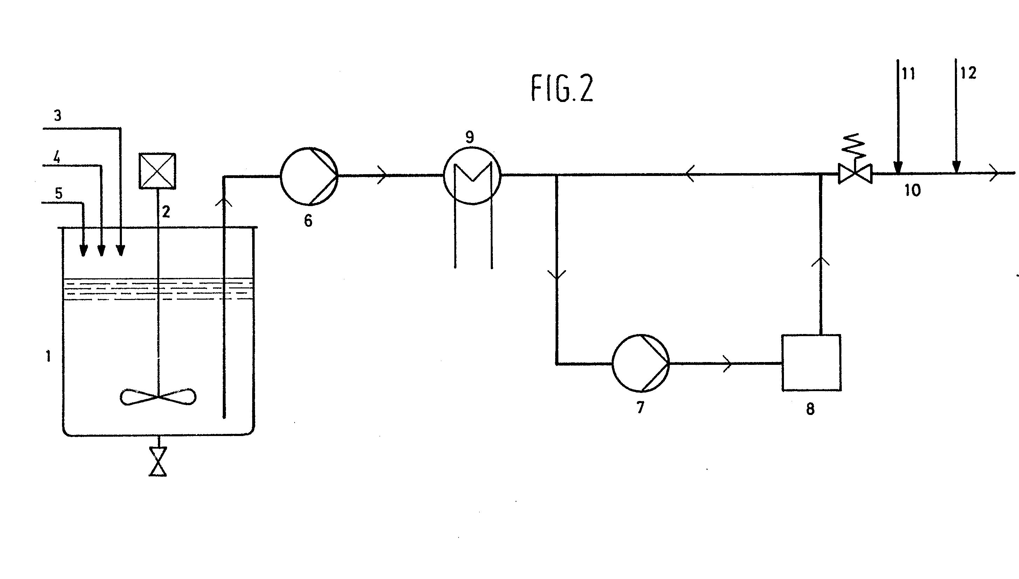

The process according to the invention can be carried out discontinuously, as described hereinbefore. It is also possible, however, for the process to be carried out continuously. In this mode, a starch and water mixture is brought to the desired temperature in a recycling circuit, whereafter fresh starch suspension is continuously supplied to the circuit and starch adhesive continuously withdrawn from the circuit. In the accompanying Fig. 2,the continuous process is illustrated diagrammatically. To suspension tank 1, equipped with a stirrer 2, starch, water (cold or warm) and possibly certain additives can be respectively supplied through conduits3, 4 and 5. The resulting starch suspension is passed via pump 6 to the recycling circuit, which includes pump 7 and disintegrator 8. If desired, the starch suspension may be pre-heated by heater 9. The temperature of the starch suspension supplied to the recycling circuit may be, for example, 40-60°C. As a result of the heat generated in the disintegrator, the temperature of the starch and water mixture is increased to, for example, 65-80°C. As soon as the temperature of the starch and water mixture in the recycling circuit has risen to the desired value, fresh starch suspension is continuously supplied to the circuit from suspension vessel 1, and at the same time a like quantity of starch adhesive is removed from the circuit through conduit 10. If desired, water (for dilution and cooling) may be added to the withdrawn adhesive through conduit 11, and certain additives may be added through conduit 12. The ready adhesive can subsequently be passed to a storage vessel for further processing.

Certain additives may be added to the starch suspension to be processed or to the resulting starch adhesive, which may modify the properties of the ready adhesive as desired. Examples of such additives are: surfactants (e.g. higher fatty acids, glycerides, soaps, sulfonated oils), mineral fillers( e.g. chalk, kaolin, talc), gelatinization promoting components (e.g. sodium hydroxide, urea, soda, soluble silicates, chloral hydrate), viscosity lowering compounds (e.g. magnesium sulphate, sodium nitrate), dispersions of synthetic polymers (e.g. polyvinyl acetate dispersions), resins (to improve water resistance, e.g. urea-formaldehyde, melamine-formaldehyde), preserving agents, defoamers, and softeners. The surfactants are of importance in those cases in which the shortness of the adhesive needs an extra accent.

The degree of disintegration and fragmentation of the swollen starch granules depends, among other factors, on the choice of the type of starch used as the starting material, the starch concentration, the type of disintegrator, the temperatures used, the rate of circulation, the total circulation period, and the nature and proportion of possible additives. By varying one or more of the above factors, the degree of fragmentation of the swollen starch granules can be regulated as desired. Thus the properties of the ready adhesive (viscosity, stability, structure, character) can be adapted to the purposes contemplated.

The adhesives produced by the process according to the invention can be used for various purposes. Examples are: the manufacture of paper bags (e.g. bags for foodstuffs, multiply bags), laminated or coated products (sticking paper to paper, cardboard, aluminum foil, etc.), wound tubes and vessels, labelling adhesives, cigarette seam glues, corrugated cardboard and gypsum panels. In particular, these adhesives are suitable for making paper bags.

Multiply paper bags are produced in large quantities. Glueing these includes making cross-joints to ensure that the paper plies do not more relatively to each other (cross-pasting), the production of the paper tube (longitudinal seaming) and finally providing the bottom (bottoming). The multiply bags as referred to herein generally are made up of combinations of several qualities of paper and/or laminates. Examples of current types are normal craft, wet-strength craft paper, clupak, semi-clupak, crepe paper, wet-strength crepe paper, and laminates such as bituminized, silicon-coated, aluminium-foil coated, and polyethylene-coated paper.

The demands made on bag adhesives are numerous. The adhesive should have sufficient stability, so that its viscosity is not changed to an undesirable extent during storage and under the influence of mechanical forces (pumping, stirring etc.). In connection with its proessability, a bag adhesive must not be too long of structure. An adhesive having a long structure gives rise to "spinning", which causes splashing of the paste at high machine rates. This may give problems in particular in the cross-pasting and bottoming processes. Furthermore the rate and degree of adherence should be at the desired level, and the drying period should not be too long.

Traditional bag adhesives are prepared on the basis of chemically and/or physically modified starches. Cold water soluble starch derivatives, in particular, are excellently suitable for the preparation of bag adhesives. In the last few years, however, there has come to be an interest in bag adhesives that can be prepared on the basis of unmodified or slightly modified starch. Such a process is described in British patent 1,559,667. In it, a starch suspension is subjected to the action of steam at 120-200°C under pressure for a very short period of time. This process renders it necessary to produce steam.

The process according to the present invention renders it possible to produce very suitable bag adhesives on the basis of unmodified or slightly modified starches. The process does not require steam for the gelatinization of the starch and preferably employs temperatures below 90°C, The resulting bag adhesive has a good initial adhesion, a short structure, an adapted viscosity,a limited change in viscosity during storage and a good rate of adherence. This adhesive can be used as a universal bag adhesive, i.e. it can be used for making longitudinal seams, for cross-pasting , and for bottoming.

The adhesives according to the present invention can be prepared using as a starting material the various unmodified native starches, such as potato starch,maize starch, wheat starch, tapioca starch, waxy starch, rice starch, and sago starch. Potato starch, in particular , is excellently suitable on account of the specific gelatinization behaviour of this starch and by reason of the superior adhesiveness of potato starch as compared with other starches. Furthermore, unpurified or partially purified starch containing materials can be used as starting materials. Suitable starting products are also warm-soluble starch derivatives,such as thin-boiling starches (acid-modified; oxidized), starch esters, starch ethers, cross-linked starches, or starches subjected to combinations of such chemical modifications.

The invention is illustrated in and by the following examples.

EXAMPLE I.

5 kg potato starch was suspended in 20 1 warm water of 60°C. The temperature of the resulting suspension was 52°C. The mixture of starch and water was circulated by means of a monopump having a capacity of 1 1/sec in a recycling circuit including a 3-stage rotor-stator-disintegrator (Dispax type). The circulation was continued for 20 minutes, during which the temperature of the starch and water mixture increased from 52° to 65°C. During the circulation, the original starch suspension was converted into a colloidal starch solution, in which, viewed microscopically, the starch was essentially present in the form of swollen granule fragments. Subsequently, the starch adhesive was removed from the recycling circuit. To the warm starch paste, 6 1 of cold water were added to produce an adhesive having a dry content of approximately 12% by weight. The viscosity of the adhesive was 2000 mPa.s. (cP) measured at 20°C using a Brookfield viscosi-meter (spindle 4; speed 20 rpm). The resulting adhesive can be used for the manufacture of multiply paper bags.

Example II.

Using the procedure of Example I, an adhesive was made, using as the starting product 4 kg maize starch, and 20 1 water of 65°C. Furthermore,

0096935

-7-

in this case the adhesive was diluted with 16 l water.

Example III.

4 kg wheat starch was suspended in 20 l water of 55°C. The resulting starch and water mixture was circulated in a recycling circuit including a disintegrator as described in Example I. When the temperature of the starch and water mixture had increased to 70°C, the adhesive was removed from the circuit. The starch solution was subsequently diluted with 20 l water. The resulting adhesive had a viscosity of 2800 mPa.s. which after 1 week had increased to 3300 mPa.s and after 2 weeks to 4800 mPa.s. (measured under the conditions as specified in Example I.

Example IV.

This example describes a process for continuously making adhesives according to the invention. A suspension tank provided with a stirrer was filled with 300 l of water. The temperature of the water was adjusted to 56°C. Subsequently 937.5 g of sulfonated oil, 375 g preservative (Proxel GXL) and 75 kg potato starch were added to the warm water. The temperature of the resulting starch suspension was 51°C. From the suspension tank, the starch suspension was passed by means of a pump into a separate recycling circuit including a pump and a disintegrator. Owing to the frictional heat generated in the disintegrator, the temperature of the starch and water mixture was increased to 68-70°C. As soon as this temperature was reached, fresh starch suspension was continuously supplied to the recycling circuit from the suspension tank, and an equal quantity of starch solution was continuously removed from the circuit.

To 120 l of the starch solution discharged, 60 l of water and 960 g of urea-formaldehyde condensate (Resin SW) were added. As a result, the temperature decreased to 47°C, and the dry content of the adhesive was reduced to approximately 11%. The viscosity of the ready adhesive was, after cooling to 20°C, 2500 mPa.s. and after 5 days, 2000 mPa.s.. The production capacity of the plant described in this example is 1100 l ready adhesive per hour. Examination under the microscope shows that the starch in the adhesive consists as to a large proportion of swollen granule fragments. The resulting adhesive is suitable for use as a paste for making multiply paper bags.

0096935

-8-

<u>C L A I M S.</u>

1. A process for making an adhesive, characterized by passing a starch and water mixture repeatedly through a recycling circuit including means exerting mechanical forces on the starch and water mixture, thereby generating heat,as a result of which ungelatinized starch granules swell, and swollen starch granules are disintegrated.

2. A process according to claim 1, characterized in that the starch in the resulting adhesive consists as to a major proportion of swollen granule fragments.

3. A process according to either of claims 1-2, characterized in that the starch and water mixture contains a surfactant.

4. A process according to claim 1 or 2, characterized by supplying to the recycling circuit a suspension of starch in water having a temperature of between 20°C and the gelatinization temperature of the starch.

5. A process according to claim 4, characterized in that the temperature of the suspension supplied is 40-60°C.

6. A process according to any of claims 1-5, characterized in that the temperature of the starch and water mixture remains below 90°C.

7. A process according to any of claims 1-6, characterized by continuously supplying to the recycling circuit a suspension of starch in water,and continuously removing from the recycling circuit a colloidal starch solution.

8. A process according to any of claims 1-7, characterized by using as the starch unmodified potato starch.

9. Adhesives made by the process according to any of the preceding claims.

10. The use of the adhesives produced by the process of any of the preceding claims for making paper bags.

FIG.1

FIG.2

European Patent
Office

**EUROPEAN SEARCH REPORT**

Application number

EP 83 20 0831

## DOCUMENTS CONSIDERED TO BE RELEVANT

| Category | Citation of document with indication, where appropriate, of relevant passages | Relevant to claim |
|---|---|---|
| Y | DE-A-2 512 810 (OY VEHNÄ)<br>* Examples and claims * | 1-10 |
| Y | FR-A-2 015 683 (CPC)<br>* Page 4, lines 10-26; page 19, lines 5-23; claims * | 1-10 |
| Y | US-A-3 537 893 (NORBERT HAUSER)<br>* Column 5, lines 4,5; claims * | 1-10 |
| Y | TAPPI, vol. 50, no. 8, August 1967, pages 57A-60A<br>J.E. MARAYANSKI et al.: "Partially swelled starch system as a homogeneous corrugating adhesive"<br>* Whole document * | 1-10 |
| A | DE-B-1 061 710 (DEUTSCHE MAIZENA WERKE) | |
| A | GB-A- 863 575 (O.J. MEYERS) | |

CLASSIFICATION OF THE
APPLICATION (Int. Cl. ³)

C 09 J    3/06

TECHNICAL FIELDS
SEARCHED (Int. Cl. ³)

C 09 J
C 13 L

The present search report has been drawn up for all claims

| Place of search<br>THE HAGUE | Date of completion of the search<br>27-09-1983 | Examiner<br>LENSEN H.W.M. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82